# DEMANDE DE BREVET EUROPEEN

(11) **EP 2 845 723 A1**
(43) Date de publication de la demande: **11.03.2015**
(21) Numéro de dépôt: 14003090.9
(22) Date de dépôt: 08.09.2014
(51) Int. Cl.: B30B 11/20, C10L 5/36, C10L 5/44

(54) **Procede de production de granules de chauffage a base de paille de maïs, dispositif mobile de production et granules obtenus**

(30) Priorité: 09.09.2013 FR 1302090
(71) Demandeur: Herrmann, Charles, 67370 Woellenheim (FR)
(72) Inventeur: Herrmann, Charles, 67370 Woellenheim (FR)
(74) Mandataire: Munier, Laurent

(57) **Abrégé**

Le procédé de production de combustible à base de transformation de paille de maïs avec des étapes suivantes :
- fourniture et alimentation de paille de maïs (a),
- mise en balles (b),
- broyage avec humidité inférieure à 30 % (c)
- réception de la matière paille de maïs y compris avec pied,
- double broyage,
- extraction des impuretés,
- filtration,
- dosage,
- mélange
- pré refroidissement,
- distribution des granulés.

Le dispositif de transformation de paille de maïs comprend au moins une unité de transformation équipée au moins, un déchiqueteur, un ensemble de deux broyeurs disposés en série, un séparateur à cyclone, un récipient collecteur doseur, un convoyeur mélangeur, un granulateur, et un convoyeur à tamis vibrant.

Application à la production de combustibles végétaux sous forme de granulés

## Description

La présente invention concerne la production de produit combustible à partir d'une unité mobile de transformation des matières premières, unité mobile exploitable sur les différents sites de production.

En premier lieu l'invention se rapporte à un procédé de transformation à l'échelle industrielle de produit, en granulés.

Depuis que le combustible fossile devient une source d'énergie qui se raréfie, dans les dernières décennies, de nombreux efforts ont été mis dans la production de matériaux d'énergies alternatives. Ces matériaux alternatifs ne doivent pas seulement être abordables et facilement disponibles, ils doivent également provenir de préférence de sources renouvelables.

Parmi les alternatives renouvelables existantes aux combustibles fossiles, la biomasse a suscité un grand intérêt. Bois, déchets agricoles, et vinicoles ou des sous-produits sont d'excellents exemples de matières énergétiques renouvelables, lorsqu'ils sont utilisés pour la production des briquettes combustibles ou de granulés.

La principale source de bois de chauffage se trouve dans les forêts. Il est simple d'imaginer que ces sources sont également des sources infinies, et qu'une augmentation de la consommation de bois de feu ne conduirait pas seulement à une augmentation du prix de ces matières premières, mais aussi à la perte de nombreuses forêts. Un arbre a besoin d'une longue période de croissance, ce qui diminue l'intérêt du bois comme source d'énergie renouvelable.

Comme une alternative aux produits à base de bois, les déchets végétaux sont annuellement renouvelables et ne nécessitent aucune parcelle supplémentaire pour leur culture.

Par conséquent, il serait utile de convertir les excédents, non nécessaires à la fertilisation du sol, pour les transformer en granulés énergétiques, cela afin de pouvoir en contrôler la parfaite combustion.

Les essais de l'inventeur ont démontrés que parmi ces déchets végétaux peu atteignent la capacité calorifique du bois. Toutefois le maïs a pu être sélectionné car il remplit cette condition.

Lesdits produits transformés proviennent de la biomasse, notamment de la paille de maïs pour obtenir des produits combustibles sous forme de granulés.

La paille de maïs sera récoltée après passage de la moissonneuse de deux façons :
1° façon : humidité à moins de 30 %: passage immédiat à la presse à paille sous toutes formes rondes ou rectangulaire.
2° façon : humidité supérieure à 30 %: coupe à la moissonneuse sous l'épi de façon à garder la tige sur pied pour permettre le séchage à moins de 30 % et de couper à l'ensileuse.

Des études de base portant sur la granulation dans un environnement laboratoire ont été effectuées en Allemagne par le DBZF. Elles démontrent que les granulés peuvent être fabriqués avec 30% d'humidité, ce qui conduit à une densité de produit final entre 450 kg et 650 kg de matière sèche par mètre cube.

Ainsi, parmi les alternatives renouvelables existantes aux combustibles fossiles, la biomasse a soulevé le plus grand intérêt. Depuis que le bois de chauffage dans les forêts est une source d'énergie limitée et non plus infinie, il est judicieux de remplacer la biomasse de bois de chauffage par des granulés de maïs transformés.

Il est à noter que la méthode de granulation est fondée sur la compression de la paille de maïs non transformée. Elle possède une densité et une humidité variables.

La rafle de maïs a déjà été utilisée comme combustible. Toutefois, son utilisation génère encore plusieurs problèmes, à savoir :
- bourrage dans vis d'alimentation des chaudières,
- créations de cavités dans les silos,
- stockage immense et volumineux.

En effet, la paille de maïs, à la différence des autres pailles (par exemple de la paille de blé) est épaisse, présente des tiges, des rafles et des pieds. Aussi les documents décrivant des procédés utilisant d'autres pailles ou déchets agricoles (voir EP2253885A2) n'enseignent pas les caractéristiques spécifiques permettant la transformation de la paille de maïs.

L'invention a pour but un procédé de granulation continue sécurisé à partir d'une unité mobile. En outre, cette méthode est écologiquement propre et supprime notamment le transport des matières premières. Ce produit présente les avantages suivants :
- Le produit est 100 % d'origine recyclée et est respectueux de l'environnement car il réduit la déforestation.
- Le produit a une charge calorifique se rapprochant du bois de chauffage.
- Le produit transformé réduit la capacité de stockage.
- Le produit une température de flamme élevée.
- Elle entraine moins de pollution parce que c'est un combustible renouvelable.

La matière première utilisée dans la production de granulés à base de paille de maïs possède les caractéristiques suivantes :
- Pouvoir calorifique supérieur à l'état humide de 6,5 % : 4100 KW / T
- Contenu calorifique inférieur : 3790 KW / T
- Humidité : 6,5% selon la norme DIN EN 147774-1

A titre de comparaison les contenus calorifiques moyens de certains types de granulés sont présentés ainsi :
- Bois : 4700 KW / T
- Le Miscanthus : 4600 KW / T
- Paille de blé: 4300 KW / T

Il sera rappelé que l'invention concerne le choix d'un matériau spécifique qui a des propriétés proches du bois pour obtenir un combustible respectueux de l'environnement.

Le bois comme matériau de chauffage présente des limitations, même si le bois est un matériau renouvelable, il pousse lentement.

La principale source de bois de chauffage se trouve dans les forêts. Une augmentation de la consommation de bois de feu ne conduirait pas seulement à une augmentation du prix de ces matières premières, mais aussi à la perte de nombreuses forêts. En raison de la longue période de croissance des arbres.

Il ressort des essais de l'inventeur parmi plusieurs produits résidus de l'agriculture constituant de la biomasse que deux produits à pousse rapide présentent des caractéristiques de combustible proche du bois, la paille de maïs et le sarment de vigne. Les autres produits n'atteignent le pouvoir calorifique nécessaire.

Or, ces produits sont saisonniers, le sarment de vigne est produit de décembre à mai. La paille de maïs est récoltée de septembre à novembre. Par conséquent, la matière première qu'est le sarment de vigne n'est pas produite pendant la récolte de paille de maïs et il est important de réaliser les produits de chauffage avant l'hiver. De plus, le maïs est produit annuellement en très grande quantité, rien qu'en Alsace sur 132000 hectares et l'objet de l'invention est de prélever une matière première sans perturber l'environnement par un rapport de prélèvement/production excessif.

Hors saison des sarments de vigne, c'est-à-dire dans les mois précédant l'hiver, au résultat des essais seule la paille de maïs remplie les conditions de pouvoir et contenu calorifique demandés.

La présente invention résout ces problèmes par un procédé de production de combustibles qui sont des granulés à base de transformation de paille de maïs à pouvoir calorifique supérieur à l'état humide de 6,5 % : 4100 KW/T et contenu calorifique inférieur à 3790 KW/T et une humidité de 6,5 % avec des étapes suivantes :
- fourniture et alimentation de paille de maïs y compris avec pied (a),
- mise en balles (b),
- broyage avec humidité inférieure à 30 % (c),
- double broyage,
- extraction des impuretés,
- filtration,
- dosage,
- mélange et convoyage
- pré refroidissement,
- distribution des granulés.

L'invention concerne aussi un dispositif mobile de transformation de paille en granulés.

Par le document « Granulateur mobile Diekra » l'idée d'un dispositif, soit une unité mobile est connue. C'est une unité mobile de pelletisation de la biomasse. Ce document à la troisième colonne, troisième paragraphe, reprend indifféremment « Miscanthus, sarments, bois, pailles, le granulateur DIEKRA débite une dizaine de tonnes par jour de granulés »

Par conséquent, ce dispositif connu n'a pas l'objet de l'invention à savoir : remplacer le bois par un produit déchet agricole, à pousse rapide, puisqu'il utilise la paille indifféremment avec le bois ou autres produit.

En outre, l'homme de métier est le producteur de produit combustible. Or, ce dispositif sert à produire de la litière. Rien n'indique une production de combustible. Ceci n'incite pas l'homme du métier à utiliser cette technique.

Au surplus, colonnes 1 et 2, la paille n'est pas spécifiquement de la paille de maïs, mais de colza ou de luzerne.

Ainsi, la sélection de la paille de maïs pour remplacer le bois selon l'invention n'est pas prévu par ce document qui ne présente pas une invention mais une idée. Ce présentateur n'étant pas passé à la réalisation concrète n'a pas pu fournir de clients et a été conduit à déposer le bilan.

Surtout, il ressort des essais l'inventeur a constaté que la paille de maïs matériau présente des morceaux long et dure. Ces morceaux qui deviennent compacts et bloquent la centrifugeuse de ce type de granulateur. Déjà ce dispositif connu techniquement ne peut pas transformer la paille de maïs. Ce qui explique pourquoi ce document passe sous silence la paille de maïs, seul produit qui se rapporte à la présente invention.

Ce document trop général, bien qu'intéressant ne concernant pas les produits de chauffage ne peut pas être considéré comme pertinent par rapport à une invention concernant des produits de substitution au bois de chauffage.

La présente invention résout ces problèmes par un dispositif permettant la mise en oeuvre de la transformation de paille de maïs en granulés telle que décrite ci-dessus comprenant au moins, une unité de réception équipée d'un moyen fluidisation de la paille de maïs, une unité de transformation équipée au moins d'un déchiqueteur, d'un espace ouvert jusqu'à un ensemble de deux broyeurs disposés en série, un séparateur à cyclone, un récipient collecteur doseur, un convoyeur mélangeur, un granulateur et un convoyeur à tamis vibrant.

L'invention se rapporte encore à des combustibles végétaux sous forme de granulés à pouvoir calorifique supérieur à l'état humide de 6,5 % : 4100 KW/T et contenu calorifique inférieur à 3790 KW/T et une humidité de 6,5 % pouvant être obtenus à partir d'un procédé de transformation de paille de maïs pouvant être conforme à celui décrit ci-dessus.

### RESUME DE L'INVENTION

L'objet de la présente invention est de fournir un procédé de transformation dans un dispositif mobile fonctionnel qui comprend au moins une unité de fluidisation de la paille de maïs alimentant au moins deux broyeurs format unité (2.1) de transformation du produit en granulés combustibles

Ce dispositif mobile de transformation de paille de maïs est à l'échelle industrielle pour privilégier la production de granulés sur site. Ces granulés devant présenter des caractéristiques thermiques et calorifiques proches de celle du bois rendant compatible un remplacement des produits l'un par rapport à l'autre.

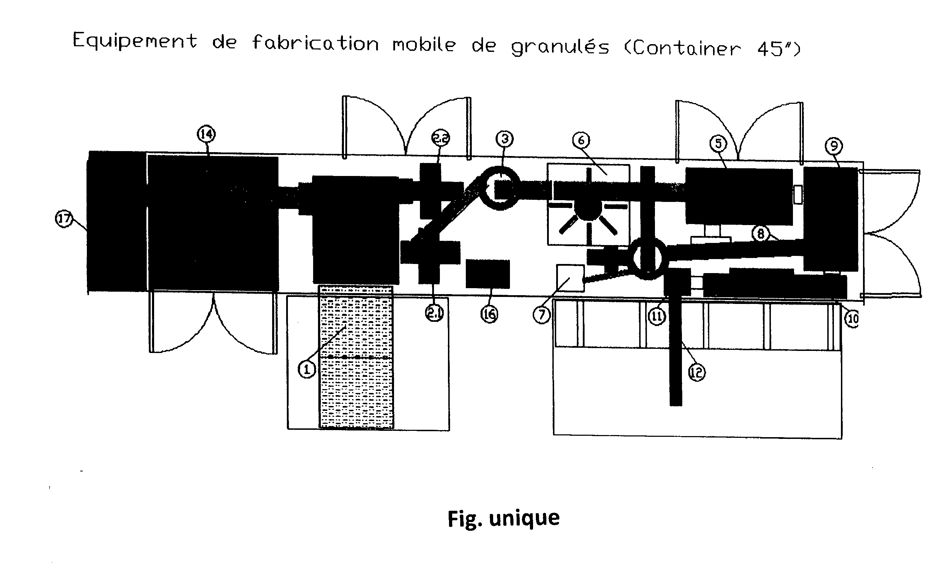

Ces objets et avantages de la présente invention apparaitront plus clairement dans la description détaillée en regard de la figure unique ci-après :

### DESCRIPTION DES MODES DE REALISATION DE L'INVENTION

La présente invention concerne un procédé et un dispositif à l'échelle industrielle mobile pour la granulation de de la paille de maïs pour obtenir des granulés de maïs comme combustible.

Selon un premier aspect de la présente invention, l'objet de celle-ci est résolu en fournissant un procédé comprenant :
a. la fourniture et l'alimentation de paille de maïs, dans ledit procédé,
b. mise en balles rondes ou parallélépipédiques,
c. une humidité inférieure à 30 %,
d. stockage des dites balles à l'abri des intempéries.

### DESCRIPTION DU PROCEDE DE FABRICATION

Unité de transformation de la paille de maïs montée sur un attelage semi-remorque. Tel qu'un conteneur comprenant une pièce insonorisée / de groupe 45 pieds. Conteneur en version spéciale HighCube, dimensions env. 13,70 * 2,55 * 2,90m. Sol renforcé, y compris tunnel de logement du mécanisme de roulement et trappes hydrauliques, côté opérateur, portes doubles sur la paroi d'extrémité.
Portes supplémentaires de révision de l'unité de filtration, porte de visite du déchiqueteur (face arrière). Plateforme de travail insérée sous le conteneur.

### 1. Réception de matière conditionnée déchiqueteur de balles - Utilisation mobile

Pour le traitement de balles rondes et parallélépipédiques. Modèle équipé d'un fond grattoir réglable (bande) et de cylindres séparateurs. Cadre coulissant hydraulique. Châssis élévateur hydraulique, relevable et rabattable. Groupe hydraulique à commande électrique. Transfert vers le broyeur. Buse d'air y compris soufflerie.

### 2.1 Unité de broyage - double broyeur

Deux broyeurs de paille disposés en série. Versions spéciales à puissance augmentée, géométrie spéciale des couteaux rotor et cribles spéciaux.

### 2.2 Protection des broyeurs.

Un espace suffisamment ouvert entre le déchiqueteur de balles et l'entrée des broyeurs permet aux impuretés d'être extraites par gravité.

### 3. Séparateur de matière

Séparation de la matière broyée et de l'air transporteur par un séparateur à cyclone. Deux vis sans fin ascendantes servant à alimenter le récipient collecteur.

### 5. Unité de filtration - recyclage

Carter de filtration, superficie du filtre env. 90 m², dispositif de secousses. Mécanique, ventilateur d'extraction pour le recyclage des particules fines de la presse à granulés I du refroidisseur. Séparateur à cyclone y compris écluse à roue cellulaire, soufflerie de poussière.

### 6. Récipient collecteur et doseur

Récipient silo muni d'un agitateur de fond évitant la formation d'agrégats : L 1,50 x I 1,50 x h 1,00 env. Extracteur-doseur à vis sans fin et écluse à roue cellulaire pour le transfert sans pression. Contrôle du niveau de remplissage par détecteur de seuil à palette. Raccordement à l'unité de filtration.

### 7. Conditionneur

Comprenant : doseur de poudre à spirale transporteuse flexible (par exemple dosage de chaux), doseur d'eau, pompe doseuse adjuvant de viscosité pour faciliter la granulation (par ex. mélasse, huile végétale).

### 8. Convoyeur I mélangeur à vis sans fin

Vis sans fin en auge servant de mélangeur / convoyeur, y compris admission et décharge de matière, livrés muni de tous les raccords nécessaires au branchement sur le conditionneur. Commande par motoréducteur.

### 9. Granulateur TL 700 complet 90 kW

Presse à granuler TL700 (filière plate), tête à trois galets. Système hydraulique d'ajustage de la tête de galets pendant le fonctionnement à actionneur hydraulique manuel, affichage de pression et transformateur de mesure.

### 10. Section de pré-refroidissement / tamisage

Convoyeur à tamis vibrant, longueur env. 2,7 m, version spéciale munie d'un fond tamiseur et de raccords d'aspiration pour le recyclage des déchets.

### 11. Pesage à bord

Bande de transport inclinée, munie de tasseaux, pour l'alimentation de la balance.
Balance à bascule à compteur électronique pour le pesage "à bord" des granulés fabriqués.

### 12. Bande de transfert

Bande de transfert pivotante / rabattable vers l'ensachage / le conditionnement des granulés. Longueur env. 2,2 m. Goulotte de déversement pivotante pour la distribution des granulés.

### 13. Armoire électrique - granulation mobile

Armoire de commande y compris dispositifs de commande des groupes. Affichage de la puissance des broyeurs et granulateurs, voyants de contrôle, convertisseur de fréquence, démarrage en douceur de tous les appareils de grande puissance, commande hydraulique, terminal d'affichage sur le déchiqueteur de balles.

Destinée à être raccordée à une génératrice ou possibilité de se raccorder sur le secteur par l'intermédiaire d'un interrupteur inverseur de sources.

### 14. Groupe électrogène 220 kVA - modèle à réservoir grande taille

Groupe électrogène comprenant un moteur 6 cylindres, à turbosoufflante, puissance mécanique env. 205 kW. Génératrice à excitateur AREP, 220 kVA (régime permanent env. 200 kVA). Réservoir intégré au cadre de base, capacité env. 990 litres, suffisant pour env. 22 à 30 heures de travail. Contrôleur d'isolement, tuyau d'échappement doté d'un silencieux, compensateur.

## Revendications

1. Procédé de production de combustible **caractérisé en ce que** les combustibles obtenus sont des granulés à base de transformation de paille de maïs à pouvoir calorifique supérieur à l'état humide de 6,5 % : 4100 KW/T et contenu calorifique inférieur à 3790 KW/T et une humidité de 6,5 % avec des étapes suivantes :
- fourniture et alimentation de paille de maïs y compris avec pied (a),
- mise en balles (b),
- broyage avec humidité inférieure à 30 % (c),
- double broyage,
- extraction des impuretés,
- filtration,
- dosage,
- mélange et convoyage
- pré refroidissement,
- distribution des granulés.

2. Procédé selon la revendication précédente comprenant une étape de stockage des balles à l'abri des intempéries (d).

3. Procédé selon l'une des revendications 1 à 2 dans lequel les balles de l'étape de mise en balles (b) sont rondes.

4. Procédé selon l'une des revendications 1 à 2 dans lequel les balles obtenues en étape de mise en balles (b) sont parallélépipédiques.

5. Dispositif permettant la mise en oeuvre de la transformation de paille de maïs en granulé selon l'une des revendications précédentes comprenant au moins, une unité de réception équipée d'un moyen fluidisation de la paille de maïs, une unité de transformation équipée au moins d'un déchiqueteur, d'un espace ouvert jusqu'à un ensemble de deux broyeurs disposés en série, un séparateur à cyclone, un récipient collecteur doseur, un convoyeur mélangeur, un granulateur et un convoyeur à tamis vibrant.

6. Dispositif selon la revendication précédente, dans lequel l'unité de réception est une unité de réception de matière conditionnée déchiqueteuse de balles et le moyen fluidisation de la paille de maïs possède des cylindres séparateurs.

7. Dispositif selon la revendication précédente, dans lequel l'unité de réception comprend un fond grattoir réglable.

8. Dispositif selon la revendication 5, dans lequel l'unité de réception est une unité de réception de matière vrac et le moyen fluidisation de la paille de maïs possède des agitateurs servants à empêcher la formation d'agrégats.

9. Dispositif selon la revendication précédente, dans lequel l'unité de réception comprend une vis sans fin d'extraction et de dosage.

10. Dispositif selon l'une des revendications 5 à 7 comprenant un conditionneur à spirale transporteuse et/ou une pompe doseuse adjuvant de viscosité.

11. Dispositif selon l'une des revendications 5 à 10 comprenant une bande de transport à balance à bascule et une bande de transfert avec goulotte de déversement pour la distribution de granulés et une armoire de commande et contrôle.

12. Dispositif selon l'une des revendications 5 à 11 dans lequel l'unité de transformation est montée sur un attelage semi-remorque.

13. Dispositif selon l'une des revendications 5 à 12 dans lequel l'unité de transformation est un conteneur comprenant une pièce insonorisée.

14. Dispositif selon l'une des revendications 5 à 13 dans lequel l'unité est équipée d'un cadre coulissant hydraulique, d'un châssis élévateur hydraulique, relevable et rabattable, d'un Groupe hydraulique à commande électrique permettant un transfert vers le broyeur et d'une buse d'air formant soufflerie.

15. Combustibles végétaux sous forme de granulés à pouvoir calorifique supérieur à l'état humide de 6,5 % : 4100 KW/T et contenu calorifique inférieur à 3790 KW/T et une humidité de 6,5 % pouvant être obtenus à partir d'un procédé de transformation de paille de maïs pouvant être conforme à celui d'une des revendications 1 à 4 et comprenant les étapes suivantes :
- fourniture et alimentation de paille de maïs (a),
- mise en balles (b),
- broyage avec humidité inférieure à 30 % (c)
- réception de la matière paille de maïs y compris avec pied, double broyage,
- extraction des impuretés,
- filtration,
- dosage,
- mélange
- pré refroidissement,
- distribution des granulés.
